# EUROPEAN PATENT APPLICATION

(11) **EP 1 174 743 A2**
(43) Date of publication of application: **23.01.2002**
(21) Application number: 01121213.1
(22) Date of filing: 14.06.2000
(51) Int. Cl.: G02B 6/35

(54) **N X M optical switch**

(30) Priority: 17.06.1999 US 334502
(62) Divisional of application: 00305052.3
(71) Applicant: JDS Uniphase Inc., Nepean, Ontario K2G 5W8 (CA)
(72) Inventor: Copner, Nigel, Fremont, CA 94538 (US); Farries, Mark c/o JDS Uniphase Corporation, Devon, TQ2 7AY (GB); Cohen, Adam D., #9-106 Fremont, CA 94538 (US); Iyer, Rajiv, Ontario, K2J 4L2 (CA)
(74) Representative: McKechnie, Neil

(57) **Abstract**

An optical switch is disclosed having 4-ports. The switch consists of a first GRIN lens having 2 ports (1 and 3) adjacent its outwardly facing end face, on opposite sides of an optical axis of the lens. A second GRIN lens is disposed to receive light from the first GRIN lens and has two ports (2 and 4) adjacent its outer end face, on opposite sides of an optical axis. In a first state, a first port (1) from the first GRIN lens couples light with port (2) of the second GRIN lens, and a second port (3) of the first GRIN lens simultaneously couples light with another port (4) of the second GRIN lens. A movable optical element, that when disposed in the path between first and second GRIN lens, provides only a single connection between a port of the first GRIN lens (1) and a port of the second GRIN lens (4) while preventing light from coupling between the other two ports (2 and 3). Hence a 1 ½ x 2 optical switch is disclosed. Furthermore, the optical switch is disclosed having multiple input and output ports. The switch consists of a first GRIN lens having 2 ports adjacent its outwardly facing end face. A second GRIN lens is disposed to receive light from the first GRIN lens and has two ports adjacent its outer end face. In a first state, a first port from the first GRIN lens couples light with a first output port of the second GRIN lens. In a second state, a movable optical element in the form of a light transmissive wedge having a reflective surface, is disposed in the path between first and second GRIN lens, providing a connection between a port of the first GRIN lens and a second port of the second GRIN lens. In a third connect state, the reflective surface of the wedge connects a port of the first GRIN lens and an output port in the same first GRIN lens. Hence an N x M optical switch is disclosed.

## Description

### Field of the Invention

This invention relates generally to optical switches and more particularly, to an optical switch having a movable wedge or a plurality of movable wedges which allow the switch to have a plurality of states.

### Background of the Invention

Heretofore, it has been well known to provide 2 x 2 optical switches having two ports on each side, wherein the switch is configurable to make a connection between ports 1 and 2 and simultaneously to provide a connection between ports 3 and 4. Alternatively, such switches are configurable to provide simultaneous connections between ports 1 and 4, and ports 3 and 2. Hence these prior art switches have two states; a first state wherein two bar connections are formed and a second state wherein 2 cross connections are formed.

It is desirable to provide an optical switch that is rugged, substantially insensitive to temperature changes within an operating range of temperature, and relatively inexpensive to manufacture. Such switches are required to be capable of switching a beam of light propagating in a waveguide, for example an optical fibre from a first similar waveguide, to a second. The core diameter of a single mode optical fibre is approximately 10 µm.

Providing suitable coupling in both switching states, and providing a switch that is fast enough, and tolerant of physical disturbances is a daunting task most switch manufacturers face.

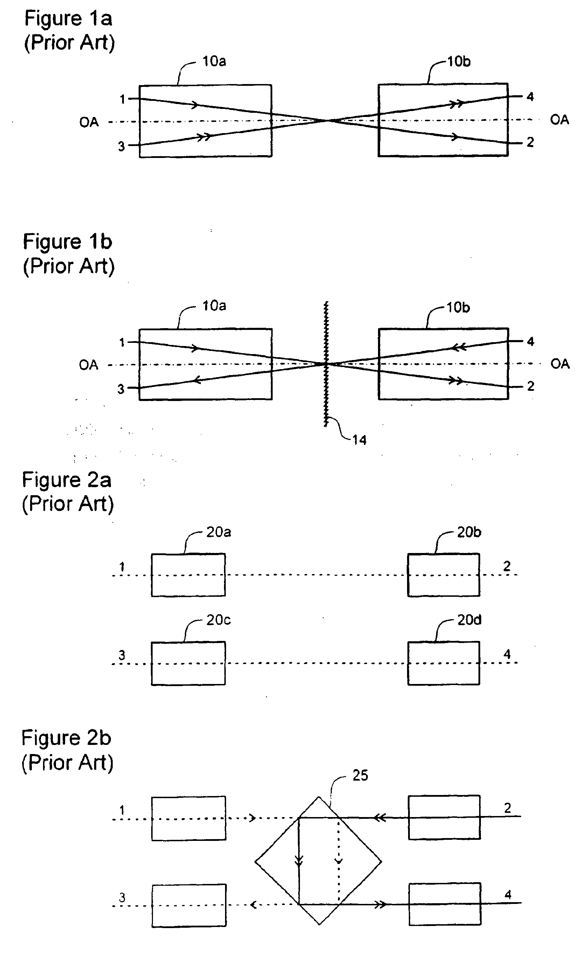

A well known optical switch made by JDS Fitel Inc. that has been sold in the United States since February 11, 1992 under the product number SR22xx-ONC, includes a pair of GRIN lenses 10a and 10b having a reflector or mirror 14 that can be selectively disposed therebetween as shown in Figs. 1a and 1b. The latter figure depicts the switch in a reflecting state with the mirror positioned between the lenses 10a and 10b. Each GRIN lens has two ports offset from the optical axis (OA) of the lens.

In operation, in a first state, light launched into port 1 of lens 10a couples with port 2 on the other GRIN lens 10b, the ports being on opposite sides of a common optical axis (OA) shared by the GRIN lenses. Similarly, in the first state an optical connection is made between the other two ports 3 and 4 on lenses 10a and 10b respectively. In a second state shown in Fig. 1b, with the mirror 14 positioned between the lenses, the optical connections between ports 1 and 2, and, 3 and 4 are broken, and new optical connections is made between each pair of ports on each respective lens. Hence two connections are made, a first between ports 1 and 3, and a second connection between ports 2 and 4.

Although this switch performs its intended function, other switches have been developed by JDS Fitel Inc. that are easier to manufacture being much less sensitive to angular and/or lateral deviation of the movable optical element disposed between the GRIN lenses. For example, from a manufacturing standpoint, it is preferable to use a transmissive optical element, in which zero or an even number of internal reflections in each plane, and/or any number of refractions, are imposed on the incident light between the lenses rather than a reflective element imposing one reflection, to route, shift, or direct a beam from one port to an alternate port when the element is disposed between lenses. Thus, by providing a transmissive element such as a prism, the switch is much less sensitive to angular deviation and misalignment of the element than a switch using a reflective element such as a mirror. For example, in comparing angular sensitivity based on a 0.05 dB excess insertion loss criterion, an existing single mirror-based switch has a typical angular tolerance of 0.007 degrees; an existing prism-based switch (as in Fig. 2a) has an angular tolerance of 0.03 degrees, whereas the transmissive optical wedge-based switch described in accordance with this invention has a angular tolerance of 1.4 degrees.

Figs. 2a and 2b illustrate a 4-port 2 x 2 optical switch having 4 GRIN lenses wherein the ports are disposed along the optical axes of the lenses. In Fig. 2a light launched into port 1 of GRIN lens 20a traverses the gap between the lenses and couples into lens 20b and exits port 2. Similarly light launched into port 3 couples to port 4 in this bar-state.

With the switch selected to be in a cross-state shown in Fig. 2b, a movable prism is positioned into the gap between the four GRIN lenses. Alternatively, the prism can be rotatable such that in a bar-state it is rotated so that its sides are parallel to the end faces of the GRIN lenses 20a, 20b, 20c, and 20d wherein no deflection occurs, and in a cross-state the prism 25 is rotated into the position shown in Fig. 2b.
Manufacturing a four port 2 x 2 switch such as the one shown in Fig. 2b is difficult because in a cross-state not only does port 1 have to align with port 3, but simultaneously, port 2 must align with port 4. In the instance that opposing sides of the prism are not parallel, within certain acceptable tolerances, aligning one set of ports for example, ports 1 and 4 via deflection is possible and in fact without difficulty, however simultaneously aligning the other set of ports for example ports 2 and 3 may not be possible since the orientation and location of the four GRIN lenses is fixed.

Such manufacturing difficulties are obviated by this invention since alignment of the second set of ports is not required while the transmission element is disposed between the lenses.

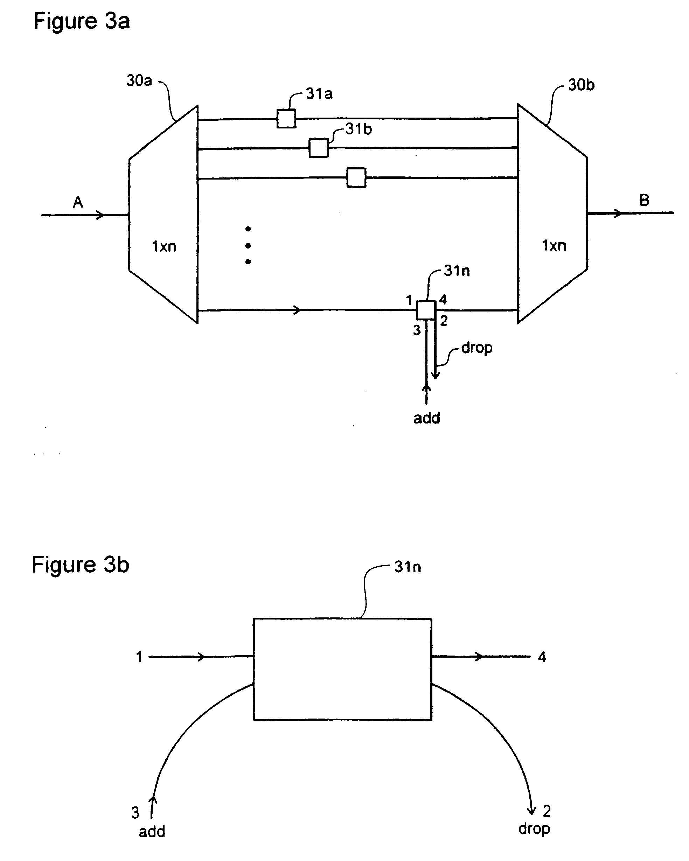

Configurable add drop optical circuits require one or more switches or elements providing the functionality of switching in the event that a signal is to be added or dropped to another optical signal path. The configurable add drop circuit shown in Fig. 3a allows an n-channel multiplexed signal to pass from point A to point B while providing the capability to drop one or more of the n-channels and simultaneously add a new same channel. For example a composite signal having wavelengths λa to λn is launched into the multiplexor 30a and is passed on to point B via the multiplexor 30b. If there is a requirement to drop the launched signal having a centre wavelength λa and λc and add in new signals having a centre wavelength λa and λc the switches 31a and 31c will selected to be in a cross-switching state such that ports 1 and 2 are coupled, and ports 3 and 4 are coupled. Otherwise, if neither adding nor dropping is desired, the switch will be in a bar-state. However one problem that results, is that if the switch is the type shown in Figs. 1a and 1b, or 2a and 2b, is that add and drop ports become coupled to one another. This can have deleterious effects and is not always a desired goal. It is often preferred to isolate the add and drop ports from one another, preventing a connection between ports 3 and 2, when ports 1 and 4 are connected. Notwithstanding, a 2 x 2 switch bar state and in a cross-state does not offer this type of isolation in either of its states.

The switch in accordance with this invention provides an elegant solution to this problem. Furthermore, the switch in accordance with this invention obviates the difficult requirement of ensuring that two pairs of ports are simultaneously coupled in a bar-state and in a cross-state.

It is an object of this invention to provide a relatively inexpensive and easy to manufacture switch that will serve as a 1 ½ x 2 optical switch.

It is a further object of this invention to provide an add drop circuit that does not optically couple the add and drop port with one another when that node of the switch is in a pass-through mode and not adding or dropping signals.

It is yet a further object of the invention to provide a tolerant, low loss, and reliable 1 ½ x 2 switch which allows a first and second port to be connected in a first state, without allowing a third and fourth port to be connected in the same state, and which allows a first and fourth port to be connected while the third and second ports are simultaneously connected.

It is an object of the instant invention to provide an improved optical switch having a transmissive wedge movable between two GRIN lenses for changing the angle of the collimated beam by a selected amount so that the output beam exits the output end face substantially parallel to the optical axis of the GRIN lenses, regardless of the connect state.

It is an object of this invention to provide a relatively inexpensive and easy to manufacture switch that will serve as an N x M optical switch.

### Summary of the Invention

In accordance with the invention, there is provided, an optical switch comprising:
four ports for receiving or transmitting one or more optical signals;
means for switching the switch between a first connect state and a second connect state, the switch in the first connect state having a single connection between two of the four ports while being absent a connection between the other two of the four ports, the switch in a second connect state for simultaneously providing a first connection between two ports of the four ports and a second connection between two other of the four ports.

In accordance with the invention, there is provided, an optical switch comprising:
four ports for receiving or transmitting one or more optical signals;
a light transmissive wedge for coupling ports between a first connect state and a second connect state, the switch in the first connect state having a single connection between two of the four ports while being absent a connection between the other two of the four ports,
the switch in a second connect state for simultaneously providing a first connection between two ports of the four ports and a second connection between two other of the four ports, the wedge when inserted between the ports in a predetermined position in a path traversed by a beam launched into one of the ports, will provide for a single connection between two of the four ports while preventing light from propagating between two other of the four ports is in the first state, the wedge disposed in another predetermined position causing the switch to be in the second state simultaneously providing a first connection between two ports of the four ports and a second connection between two other of the four ports.

In accordance with another embodiment of the invention an add-drop optical circuit is provided comprising: a first multiplex/demultiplexor; a second multiplex/demultiplexor; waveguides disposed between the first and second multiplex/demultiplexors; and
a plurality of 1 ½ x 2 optical switches coupled to at least some of the waveguides for adding and dropping optical signals, the optical switches substantially preventing optical signals from propagating from an add port to a drop port.

In accordance with another embodiment of the invention an add-drop optical circuit is provided comprising: a demultiplexor/multiplexor for demultiplexing a composite optical signal having a plurality of channels;
multiplexor/demultiplexor for multiplexing a plurality of signals into a composite optical signal, the demultiplexor/multiplexor and multiplexor/demultiplexor having waveguides disposed therebetween for carrying optical signals from the multiplexor/demultiplexor to the demultiplexor/multiplexor, at least a pair of waveguides being coupled to a 1 ½ x 2 optical switch, for adding and dropping optical signals to and from the optical waveguides respectively, the optical switch having only one connection between only two ports in a first state and having two simultaneous connections, connecting a first port with a drop port, and a third port with an add port in a second state, the optical switch disallowing and preventing optical signals from propagating from an add port through the switch to a drop port in the first state.

In accordance with another embodiment of the invention, a 4-port optical switch is provided comprising:
a first GRIN lens having 2 ports (1 and 3) adjacent an end face thereof on opposite sides of an optical axis of the lens;
a second GRIN lens disposed to receive light from the first GRIN lens and having two ports (2 and 4) adjacent an end face thereof on opposite sides of an optical axis thereof, in a first state, a first port (1) from the first GRIN lens coupling with a port (2) of the second GRIN lens, and a second port (3) of the first GRIN lens simultaneously coupling with another port (4) of the second GRIN lens;
a movable optical element, that when disposed in the path between first and second GRIN lens, provides only a single connection between a port of the first GRIN lens (1) and a port of the second GRIN lens (4) while preventing light from coupling between the other two ports (2 and 3).

In accordance with the invention, an optical switch is provided which comprises: at least one input port on one side for launching a beam of light along an optical path; at least two output ports on an opposite side for receiving the beam of light, a first of the at least two output ports optically coupled to the at least one input port; and a light transmissive wedge having at least two non-parallel surfaces, the light transmissive wedge movable into and out of the optical path, the wedge movable at least between first, second, and third positions corresponding to first, second, and third connect states, respectively.

In an embodiment at least one of the at least two non-parallel surfaces corresponds to an input face of the light transmissive wedge and another of the at least two non-parallel surfaces corresponds to an output face of the light transmissive wedge.

The input and output faces of the light transmissive wedge can be light transmissive surfaces for refracting the beam of light passing therethrough.

One of the input and output surfaces may comprise at least a reflective area for reflecting back the beam of light incident thereon so that the beam of light launched into the at least one input port is optically coupled to an output port located on the same side of the light transmissive wedge as the input port substantially opposite the at least two output ports.

An actuator is provided for moving the light transmissive wedge into and out of the optical path.

In one embodiment the actuator is a three or more position actuator for positioning the light transmissive wedge at least in the first, second and third positions, wherein in the first position the actuator moves the wedge out of the optical path for providing a single connection between the at least one input port and a first output port; in the second position the actuator moves the wedge into the optical path for single connection between the at least one input port and a second output port; and in the third position the actuator moves the wedge such that the reflective area is positioned in the optical path for single connection between the at least one input port and a third output port.

The optical switch may comprise at least a first GRIN lens optically coupled to the at least one input port for substantially collimating the beam of light onto the light transmissive wedge and for focusing the beam of light reflected from the reflective surface to the third output port in the third connect state.

At least a second GRIN lens can be provided which is substantially coaxial to the first GRIN lens and optically coupled to at least two output ports for focusing the collimated beam of light from the first GRIN lens to the first output port in the first connect state and from the light transmissive wedge to the second output port in the second connect state.

At least another light transmissive wedge having at least two non-parallel surfaces can be provided, the at least other wedge movable into and out of the optical path for allowing at least a fourth, a fifth, a sixth and a seventh connect states.

Alternatively the optical switch can comprise a first GRIN lens and a second GRIN lens, the first GRIN lens optically coupled to the at least one input port and the second GRIN lens optically coupled to the at least two output ports, the lenses being arranged such that their inner end faces are facing one another to allow the beam of light launched into the at least one input port to couple to one of the at least two output ports on the outer end face of the second lens.

In accordance with another embodiment the optical switch can comprise a multifaceted wedge movable into and out of the optical path; a multifaceted wedge corresponding to an arrangement of a plurality of light transmissive wedges in close contact, each of the light transmissive wedge having at least two non-parallel surfaces wherein a surface of the at least two non-parallel surfaces of each light transmissive wedge corresponds to an input surface and another surface of the at least two non-parallel surfaces of each light transmissive wedge corresponds to an output surface.

An area of at least one facet of the multifaceted wedge can have a reflective area for reflecting back the beam of light incident thereon.

In accordance with another embodiment of the invention, there is provided, a method for switching a beam of light from one of a plurality of output ports to another, comprising the step of: receiving at an input port a beam of light parallel to the optical axis of a first GRIN lens for collimating the beam of light; transmitting the beam of light along an optical path to a second GRIN lens optically coupled to the plurality of output ports, the second GRIN lens for focusing the beam of light; and inserting a wedge into the optical path for modifying the optical path so that the beam of light switches from one of the plurality of output ports and so that the beam of light exits the second GRIN lens at a predetermined output port of the plurality of output ports substantially parallel to the optical axis of the GRIN lens.

Preferably, the step of inserting the wedge comprises ensuring that the optical signal enters the second GRIN lens at an angle substantially concentric with the optical axis.

Furthermore, ensuring that the optical signal enters the second GRIN lens at an angle substantially concentric with the optical axis comprises focusing the beam of light at a specific output port of the plurality of output ports coupled to the second GRIN lens.

Inserting the wedge into the optical path of the beam of light comprises using an actuator for moving the wedge.

The method for switching a beam of light from one of a plurality of output ports to another, can also comprise the step of inserting at least another different movable wedge into the optical path.

Accordingly, inserting another different movable wedge into the optical path comprises moving the other movable wedge.

### Brief Description of the Drawings

Exemplary embodiments of the invention will now be described in conjunction with the drawings in which:
Fig. 1a is a prior art diagram of a pair of juxtaposed graded index (GRIN) lenses showing light traversing from port 1 to 2 and port 3 to 4, diagonally;
Fig. 1b is a prior art diagram of an optical switch based on the lens arrangement in Fig. 1a and having a movable mirror disposed between the lenses;
Figs 2a and 2b show another embodiment of a 4-port transmissive optical switch more tolerant of angular misalignment having a prism disposed therebetween;
Fig. 3a is a circuit diagram of an add drop circuit in accordance with the invention;
Fig. 3b is a diagram of a switch node of the add drop circuit shown in Fig. 3a;
Fig. 4 is a diagram of an pair of GRIN lenses having a light transmissive asymmetric wedge disposed therebetween;
Figs 5a and 5b show a 1 ½ x 2 optical switch in accordance with this invention;
Fig. 6 is a diagram of a pair of GRIN lenses, which do not share a common optical axis, and wherein the GRIN lenses having a light transmissive asymmetric wedge disposed therebetween;
Figs 7(a) and 7(b) are diagrams of a pair of GRIN lenses having a light transmissive asymmetric wedge disposed therebetween, the wedge having wedge angles defined in both planes containing the optical axis. The tilt (Fig. 7(a)) or double-dimension wedge (Fig. 7(b)) thus induced provides improved angular sensitivity relative to a single wedge;
Fig. 8 is a side view of an optical device having a pair of coaxial GRIN lenses and a very thin filtering element disposed therebetween;
Fig. 9 is a side view of a coupling system wherein losses are reduced by angling a receiving output fibre with respect to the angle of the input fibre;
Fig. 10 is a side view of a GRIN lens receiving a collimated beam concentric with the optical axis and angled such that it exits the lens at a selected output port parallel to the optical axis of the lens;
Fig. 11a is a side view of a diagram showing the first connect state in accordance with the invention wherein a beam of light is collimated and focussed by a pair of coaxial GRIN lenses;
Fig. 11b is a side view of a diagram showing the second connect state in accordance with the invention wherein a beam of light is collimated and focussed by a pair of coaxial GRIN lenses having a first light transmissive asymmetric wedge disposed therebetween;

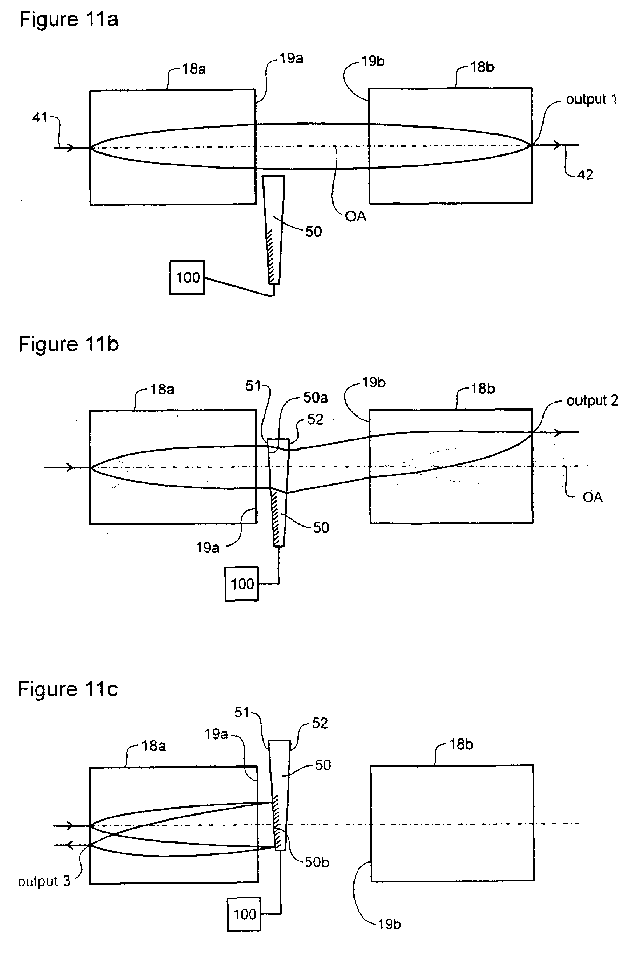

Fig. 11 c is a side view of a diagram showing the third connect state in accordance with the invention wherein a beam of light is collimated, reflected on a reflective surface of the wedge, and focussed by a GRIN lens;

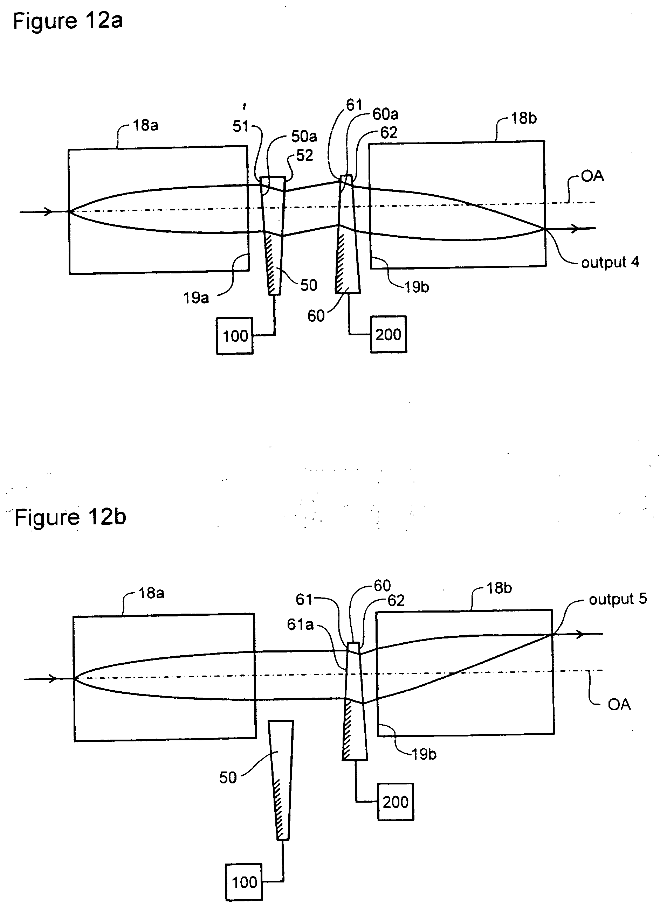

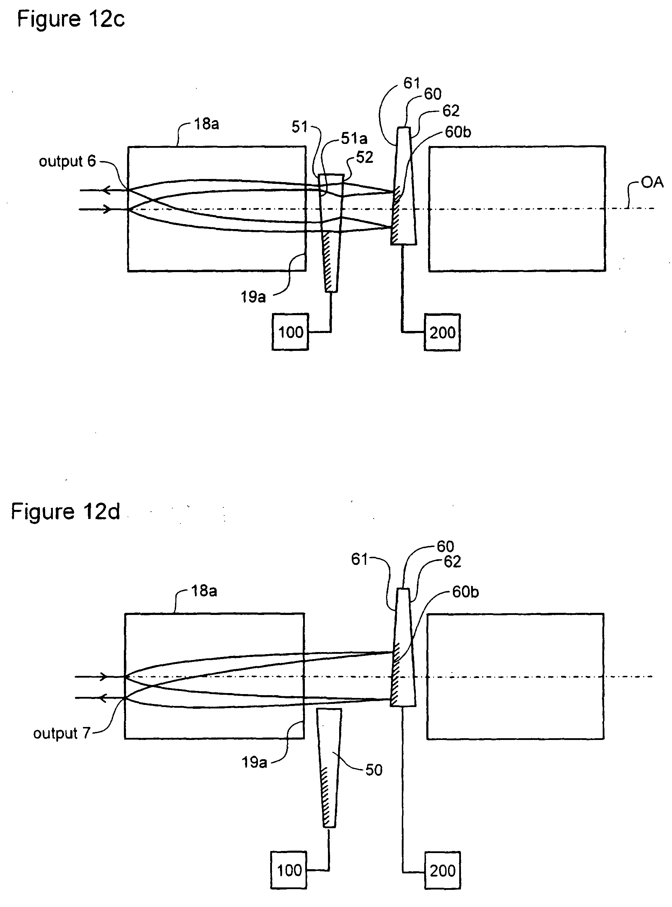

Fig. 12a is a side view of a diagram showing a fourth connect state in accordance with an other embodiment of the invention wherein a beam of light is collimated and focussed by a pair of coaxial GRIN lenses having a first and a second light transmissive asymmetric wedge disposed therebetween;
Fig. 12b is a side view of a diagram showing a fifth connect state in accordance with another embodiment of the invention wherein the first wedge is moved out of the path of the beam of light and the second wedge is into the path of the beam and disposed between a pair of coaxial GRIN lenses;
Fig. 12c is a side view of a diagram showing a sixth connect state in accordance with an embodiment of the invention wherein a beam of light is collimated by a GRIN lens, refracted through the first wedge, reflected on a reflective surface of the second wedge, sent back to the first wedge and focussed by the same GRIN lens;
Fig. 12d is a side view of a diagram showing a seventh connect state in accordance with an embodiment of the invention wherein a beam of light is collimated, reflected on a reflective surface of the second wedge, and focussed by a GRIN lens whereas the first wedge is moved out of the path of the beam of light;

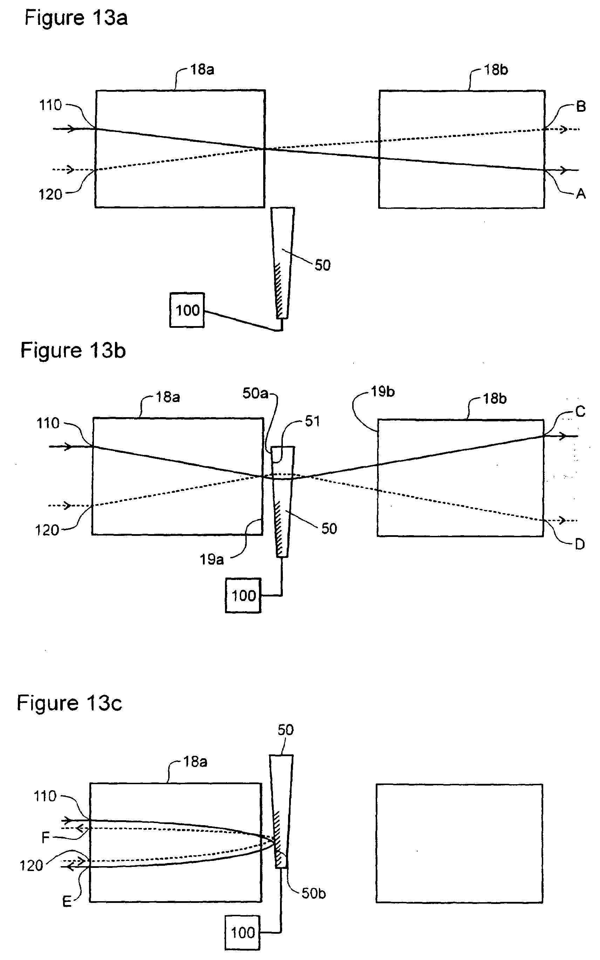

Fig. 13a is a side view diagram showing a connect state in accordance with an embodiment of the invention wherein two beams of light are collimated and focussed by a pair of coaxial GRIN lens;
Fig. 13b is a side view diagram showing a connect state in accordance with an embodiment of the invention wherein two beams of light are collimated and focussed to two output ports by a pair of coaxial GRIN lenses having a light transmissive asymmetric wedge disposed therebetween;
Fig. 13c is a side view diagram showing a connect state in accordance with an embodiment of the invention wherein two beams of light are collimated, reflected on the reflective surface of a wedge and focussed by a GRIN lens to two output ports located on the same side as the input ports;

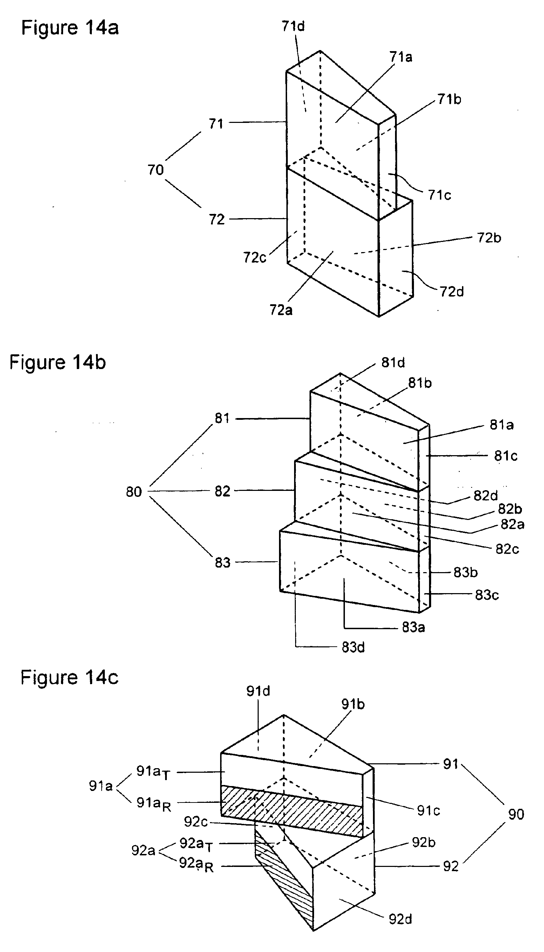

Fig. 14a shows a perspective diagram of a multifaceted wedge;
Fig. 14b is a perspective diagram of another multifaceted wedge; and,
Fig. 14c is a perspective view of a multifaceted wedge having reflective areas.

### Detailed Description

Preferred embodiments of this invention are based on the use of a light transmissive wedge that is defined as an optical medium, whereby the two refracting planes are mutually arranged such that there is a finite angle or angles therebetween, such angle(s) being defined in either or both of the planes comprising the optical axis. The wedge angle(s) and centre thickness are optimised, given judicious choice of material to form the wedge, to give the desired radial offset at the focal plane of the lens, together with optimal fibre coupling efficiency.

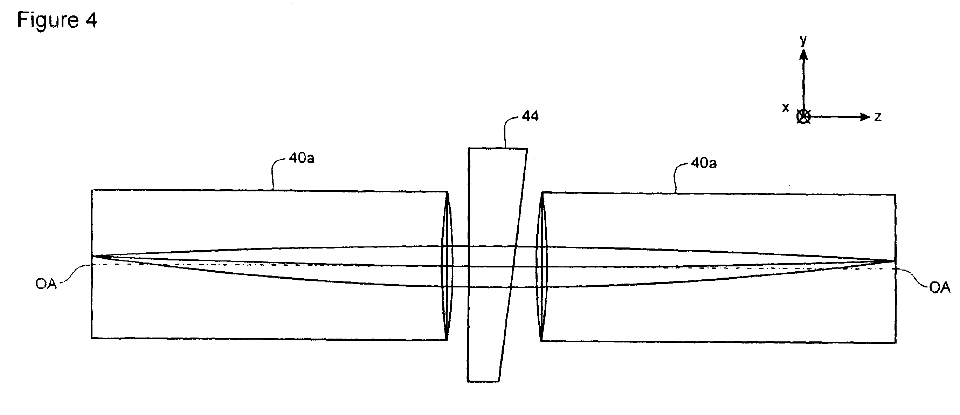

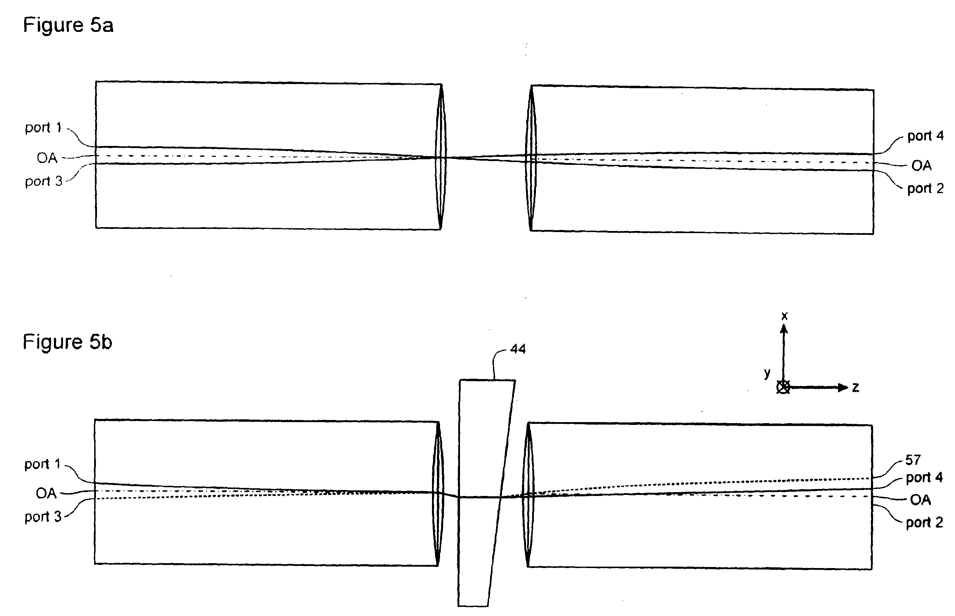

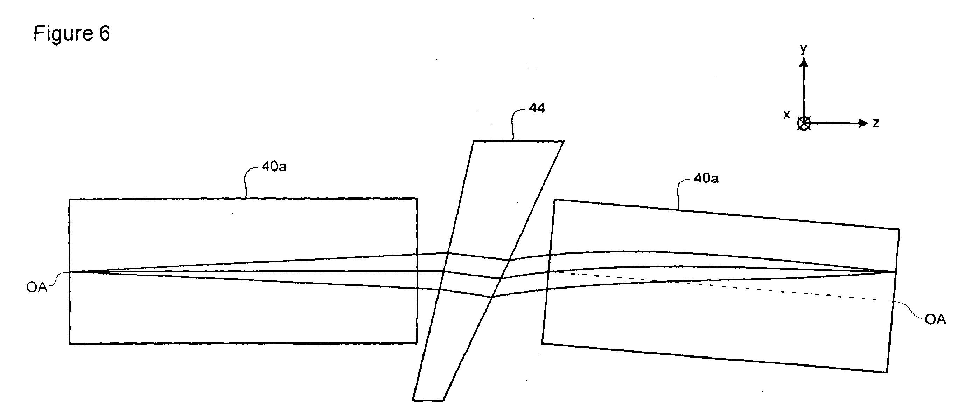

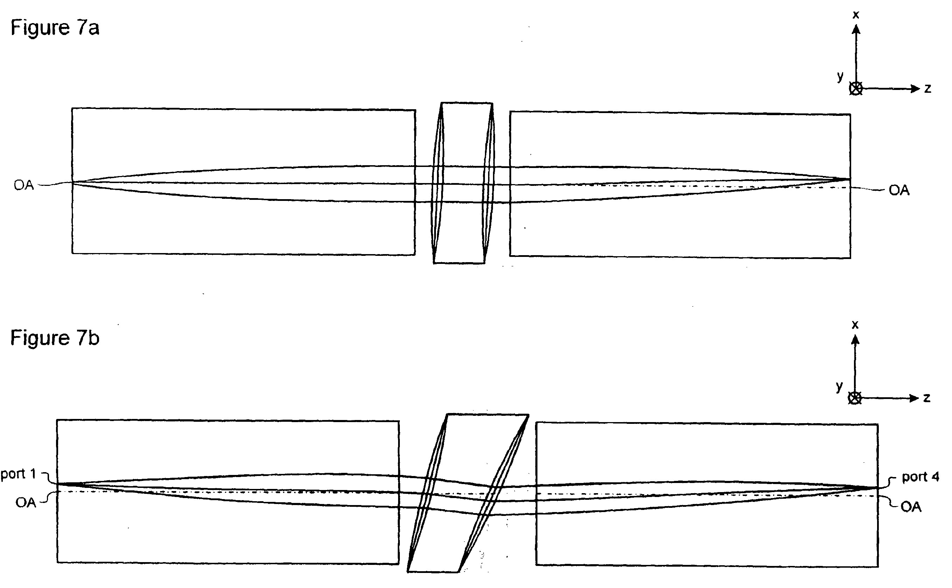

Referring now to Fig 4, an optical coupling between two lenses 40a is shown, for the purposes of explanation of a preferred embodiment of the invention shown in Figs 5a and 5b. Here, in Fig.5a a beam is launched into a first quarter pitch lens 40a so that its collimated or near-collimated output traverses the optical element in the form of a wedge 44, as defined above. In this embodiment the lenses 40a share the same optical axis and, in order to avoid unwanted etalon effects, have their inner end faces polished such that, viewed in the xz plane, they appear as lines subtending equal and opposite angles to the x-axis. In an alternative embodiment (Fig. 6) the lenses are disposed such that lines extending along their optical axes intersect and do not share a common optical axis. It can be seen that the effect on the collimated or near-collimated beam traversing the wedge 44 is that it is refracted by the first and second faces of the wedge; these refractions, in combination with the propagation through the wedge, have the net effect of angularly deviating the beam, on leaving the wedge, with respect to the incident angle of the beam. In this embodiment the light exiting the wedge is angularly deviated through a positive angle in the yz plane and consequently enters the lens 40a at an angle. Similar to Fig. 1a, as the light is incident on the lens front face at an angle to the optical axis of the lens, it is directed outward through a port parallel to and radially displaced from the optical axis of the lens. This is advantageous for coupling an optical fibre tube to the end face of the lens. The wedge 44 in Fig. 5b is oriented such that only two ports, port 1 and port 4 are optically coupled, light not coupling between the other two ports; rather light input from port 3 forms an output image radially displaced at least 100 microns away from the nearest active port, therefore there is no optical crosstalk. It can be seen that light from port 3 is directed to a location 57 offset from port 4 to which it couples light when the wedge is removed. The embodiments shown in Figs 7(a) and 7(b) demonstrate that the wedge may have angles defined in both planes containing the optical axis.

The operation of the optical switch shown in Fig. 5a and 5b is as follows. In Fig. 5a the switch is shown in a first state with no wedge present between the ports, having ports 1 and 2 optically coupled, and having ports 3 and 4 simultaneously optically coupled.

In Fig. 5b with the wedge disposed between the ports, ports 1 and 4 are optically coupled and ports 3 and 2 are not coupled to each other or to the other ports. Of course known mechanical means can be provided to move the wedge 44 out of the path of the beams. For example in one embodiment, a solenoid driving a cam coupled to the wedge (not shown) is provided.

Of course, numerous other embodiments may be envisaged, without departing from the spirit and scope of the invention. For example an embodiment which is not preferred, but will function as a 1 ½ x 2 optical switch is one wherein the moveable element disposed in between the two GRIN lenses providing only one coupling between two ports, the other two ports being optically uncoupled, is a single sided reflector between the two lenses.

Notwithstanding, providing a 1½x2 optical switch that functions in transmission in both states is preferred.

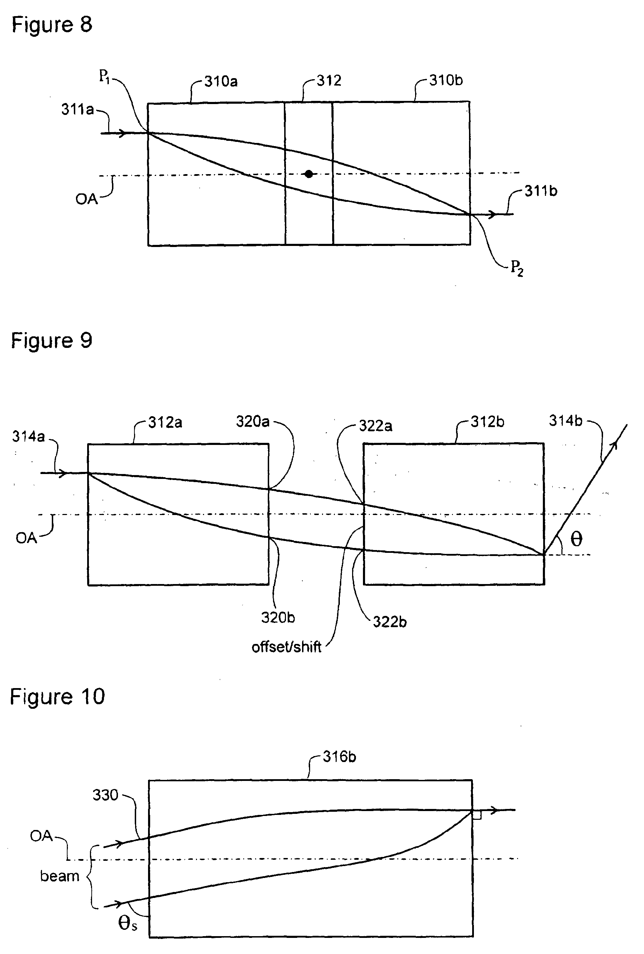

An optical arrangement is shown in Fig. 8, wherein two quarter pitch GRIN lenses 310a and 310b are disposed so that their collimating ends are adjacent one another in a back-to-back relationship. A very thin optical element in the form of a filter 312 is sandwiched therebetween. The filter 312 can be coated directly on one of the inwardly facing end faces of the lenses, or alternatively may be coated on a substrate that is antireflection coated and sandwiched between the two GRIN lenses 310a and 310b. It should be noted, that the optical axes of the input/output fibres 311a and 311b are parallel with the optical axes of the two GRIN lenses. Since the beam traversing the lenses 310a and 310b about the filter element 312 is at a location substantially coincident with the optical axes of the GRIN lenses, the light input orthogonal to the end face of the lens 310a at port P₁, propagates through the filter 312 and through the second lens 310b and exits at port P₂ as a focused beam that is parallel to the input beam and the optical axes of the lenses 310a and 310b.

Fig. 9 illustrates an offset that occurs when a gap is present between a pair of coaxial GRIN lenses 312a and 312b. The beam exiting the lens 312a intersects the end face equidistant from the optical axis indicated by lines 320a and 320b, which define the outer most limits of the beam as it traverses the lens 312a end face. However, due to the gap between the lenses 312a and 312b, the beam traverses the inwardly facing end face of the lens 312b having its outermost limits defined by the locations 322a and 322b which are not equidistant from the optical axis OA of the second lens 312b.
This beam shift downward results in the output beam being directed upward along the optical axis of the optical fibre 314b. Accordingly, substantial coupling losses may occur between an input port on a first GRIN lens and an output port on a second GRIN lens, when the input and output ports are disposed adjacent the optical axes of the two GRIN lenses, and wherein a gap separating the GRIN lenses causes a beam propagating from the input port through the first GRIN lens to be shifted as it traverses the element towards the output port and enters the second lens at an offset to the optical axis of the lens. To overcome this disadvantage and to provide a more efficient optical coupling, the fibre 314b is provided at an angle θ > 0 degrees with respect to the optical axis of the lens.

It is also possible, as shown in Fig. 10, to launch the beam 330 at a judiciously selected angle θₛ at the left input end face of the GRIN lens 316b in such a way that the beam is selectively directed towards a desired output port location at the right output end face of the GRIN lens 316b. Moreover, by ensuring that the beam has its centre substantially coincident with the optical axis OA of the lens, the beam thus propagates through the lens 316b and exits the output end of the lens parallel to the OA of the lens.

Fig. 11a shows the first connect state of the optical switch in accordance with another embodiment of the invention wherein a wedge 50 is moved out of the beam path. A pair of quarter pitch GRIN lenses 18a and 18b, having end faces parallel to each other, disposed back to back sharing the same optical axis are slightly spaced apart. Two optical waveguides 41 and 42 are shown coaxial with and coupled to the lenses along the optical axis of the lenses 18a and 18b shown by a dotted line. A beam profile is also shown within the lenses 18a and 18b as if light was launched from the waveguide 41 to the respective lens 18a and exited the lens 18b at output 1 to the waveguide 42.

Fig. 11b illustrates the second connect state wherein an actuator, for example in a form of a three-position actuator 100, moves the wedge 50 into the path of the beam between the coaxial GRIN lenses 18a and 18b. The wedge 50 is defined herein as an optical medium having two non-parallel surfaces, which for exemplary purposes are shown as input end 51 and output end 52. The angle between the two non-parallel surfaces and the centre thickness of the wedge are judiciously chosen to give optimal fibre coupling. Either the upper half or the lower half area of the wedge facing the collimating GRIN lens is coated with a reflective coating. Similarly, either the other of the upper half or the lower half area of the wedge facing the collimating GRIN lens is light transmissive. The input end face 51 of the wedge 50 is facing the end face 19a of the GRIN lens 18a; the angle existing between the surface 51 and the optical axis of the GRIN lens 18a is substantially about 90°. The output end face 52 of the wedge 50 is facing the input end 19b of the second GRIN lens 18b; the second non parallel surface 52 is not normal to the optical axis of the GRIN lens 18b.

In operation, in this embodiment, a beam of light parallel to the optical axis is launched into the input end of the GRIN lens 18a; at the end face 19a, the collimated beam concentric with the optical axis of the lens exits the lens and is incident on the transmissive surface 50a of the wedge 50. The beam is slightly refracted into the wedge and exits the wedge 50 at the face 52 oriented towards the input end 19b of the lens 18b. The angle of the surface 52 with respect to the end face 19b of the lens 18b is chosen to ensure that the light enters the input end 19b of the lens 18b and is directed towards an output port 2. The substantial coincidence of the beam of light with the optical axis allows the focussed beam to exit the lens 18b substantially parallel to the optical axis at the output port 2.

The third connect state is illustrated in Fig. 11c. The three-position actuator 100 moves the wedge 50 into the path of the beam between the coaxial GRIN lenses 18a and 18b. The wedge 50 is the same wedge described previously. The wedge is placed such that the reflective surface 50b of the surface 51 faces the end face 19a of the lens 18a.

A beam of light parallel to the optical axis is launched into the input end of the GRIN lens 18a; at the end face 19a of the GRIN lens 18a, the collimated beam substantially concentric with the optical axis of the lens exits the lens and is incident on the reflective surface 50b of the wedge 50. The beam is then reflected back into the same GRIN lens 18a. The angle between the surface 51 and the optical axis is substantially about 90°. The exact angle is chosen to ensure that the collimated light is redirected toward output port 3. Moreover, the reflective beam of light is substantially concentric with the optical axis of the lens, thus the focussed beam exits the lens 18a substantially parallel to the optical axis at the output port 3 located on the same end face that the input beam was launched through.

In another embodiment of the present invention, additional wedges are provided between two substantially coaxial GRIN lenses to increase the number of ports. For example, by adding one or more movable wedges 60 similar but not identical to the wedge 50 previously described, between the output surface 52 of the wedge 50 and the input end 19b of the lens 18b, the number of output ports is changed. Such an embodiment is shown in Fig. 12 that details the different connect states achieved when a second movable asymmetric light transmissive wedge 60 having two non-parallel to each other surfaces forming an input end 61 and an output end 62 is inserted into the switch. The second wedge 60 is moved in or out of the path of the beam of light with a second three- position actuator 200. In Fig. 12a, the three-position actuator 200 moves the wedge 60 into the path of the beam between the wedge 50 and the input face of the GRIN lens 18b. The input end face 61 of the wedge 60 is oriented towards the output end face 52 of the wedge 50; the output end face 62 of the wedge 60 is oriented towards the input end 19b of the second GRIN lens 18b.

In such configuration, a beam of light parallel to the optical axis is launched into the input end of the GRIN lens 18a; at the end face 19a of the GRIN lens 18a, the collimated beam concentric with the optical axis of the lens exits the lens and is incident on the transmissive surface 50a of the wedge 50. The beam is then slightly refracted into the wedge and exits the wedge at the surface 52 oriented towards the transmissive surface 60a of the wedge 60; the beam is slightly bent into the wedge 60 and exits the wedge at the surface 62 oriented towards the input end 19b of the lens 18b. The angle of the surfaces 61 with respect to the optical axis on one hand and the angle of the surface 62 with respect to the optical axis on another hand are chosen to ensure that the light enters the input end 19b of the lens 18b and is directed towards an output port 4. The coincidence of the beam of light with the optical axis makes the focussed beam exiting the lens 18b substantially parallel to the optical axis at the output port 4.

Fig. 12b shows a fifth connect state wherein the three-position actuator 100 moves the wedge 50 out of the path of the beam whereas the three-position actuator 200 places the wedge 60 into the path of the beam of light between the coaxial GRIN lenses 18a and 18b. Because of the absence of the wedge 50, the beam of light exiting the output end 19a of the lens 18a propagates through the air before contacting the input transmissive surface 60a of the wedge 60. The beam of light is refracted into the wedge 60 and exits the wedge at the output surface 62 oriented towards the input end 19b of the lens 18b. The angle of the surfaces 61 and 62 with respect to the optical axis are chosen to ensure that the light enters the input end 19b of the lens 18b and is directed towards an output port 5. The coincidence of the beam of light with the optical axis makes the focussed beam exiting the lens 18b substantially parallel to the optical axis at the output port 5.

A sixth connect state is illustrated in Fig. 12c. The three-position actuators 100 and 200 move the wedges 50 and 60 into the path of the beam between the coaxial GRIN lenses 18a and 18b. The wedge 50 is moved in a position allowing the beam of light to pass therethrough in its second connect state, i.e., the transmissive surface 50a is oriented towards the end face 19a of the lens 18a. The wedge 60 is placed such that the reflective surface 60b of the surface 61 is oriented towards the end 52 of the wedge 50.

A beam of light parallel to the optical axis is launched into the input end of the GRIN lens 18a; at the end face 19a of the GRIN lens 18a, the collimated beam concentric with the optical axis of the lens exits the lens and enters the input transmissive face 50a of the wedge 50; the beam is bent into the wedge and exits the wedge 50 at the output end 52 to propagate to the wedge 60 where it contacts the reflective surface 60b of the wedge 60. The beam is reflected back into the wedge 50. The beam is refracted again while propagating through the wedge 50 and is directed towards a selected output port 6, located on the same end face that the input beam was launched through. Moreover, the reflective beam of light is substantially concentric with the optical axis of the lens, thus the focussed beam exits the lens 18a substantially parallel to the optical axis at the output port 6.

Fig. 12d shows a seventh connect state where the wedge 50 is moved out of the path of the beam by the three-position actuator 100 whereas the three-position actuator 200 positions the reflective surface 60b of the wedge 60 in the path of the beam of light.

In such configuration, a beam of light parallel to the optical axis is launched at the input end of the GRIN lens 18a; at the end face 19a of the GRIN lens 18a, the collimated beam concentric with the optical axis of the lens exits the lens to contact the reflective surface 60b of the wedge 60. The beam is then reflected back into the same GRIN lens 18a. The angle of the surface 61 is chosen to ensure that the collimated light is redirected toward output port 7. Moreover, the reflective beam of light is substantially concentric with the optical axis of the lens, thus the focussed beam exits the lens 18a substantially parallel to the optical axis at the output port 7 located on the same end face that the input beam was launched through.

Fig. 13a, 13b and 13c illustrate an embodiment wherein additional input ports are provided. For clarity, each beam of light is represented by a single ray of light. One optical path is shown with a solid line and the other is shown with a dashed line. Only one wedge 50 is shown in this embodiment. Fig. 13a shows a connect state when the wedge 50 is moved out of the optical paths. A beam of light parallel to, and off the optical axis of the GRIN lenses 18a and 18b, launched into input port 110 is directed towards an output port A. Another beam of light parallel to, and off the optical axis of the GRIN lenses 18a and 18b launched into input port 120 is directed towards an output port B. The substantial coincidence of the beams of light with the optical axis allows the focussed beams to exit the lens 18b substantially parallel to the optical axis at the output ports A and B.

Fig. 13b shows the paths of the beams of light when the wedge 50 is moved between the two GRIN lenses 18a and 18b such that the transmissive surface 50a of the wedge 50 is placed between the end face 19a of the GRIN lens 18a and the input face 19b of the GRIN lens 18b. The beam of light launched from the input port 110 is optically coupled to an output port C, and the beam of light launched from the input port 120 is optically coupled to an output port D. The characteristics and displacement (or position) of the wedge allow the beams of light to exit the GRIN lens 18b substantially parallel to the optical axis of the lenses.

In Fig. 13c, the actuator 100 has moved the wedge 50 between the two GRIN lenses 18a and 18b so that the reflective surface 50b of the wedge 50 is oriented towards the end face 19a of the GRIN lens 18a. In such a configuration, the beam of light launched from input port 110 is reflected back to the GRIN lens 18a and directed towards an output port E located on the same side of the input port 110. Similarly, the beam of light launched from input port 120 is reflected back to the GRIN lens 18a and focussed at an output port F located on the same side of the input port 120. The characteristics of the wedge allow the beams of light to exit the GRIN lens 18b substantially parallel to the optical axis of the lens.

Fig. 14a shows a multifaceted wedge 70 having at least two different wedged-shaped parts, 71 and 72. The two wedged-shaped parts are disposed so that the wedge 71 is on the top of and in contact with the wedge 72. The wedge 71 has at least two non-parallel surfaces 71a and 71b and at least two other surfaces 71c and 71d, wherein the width of surface 71c is smaller than the width of the surface 71d. The wedge 72 has at least two non-parallel surfaces 72a and 72b, and at least two other surfaces 72c and 72d, wherein the width of surface 72c is smaller than the width of the surface 72d. The wedges are positioned so that the smallest surface 72c of the wedge 72 is below the largest surface 71d of the wedge 71, and the largest surface 72d of the wedge 72 is below the smallest surface 71c of the wedge 71. The angle between the two non-parallel surfaces and the centre thickness of the wedges 71 and 72 are selected so that, when the multifaceted wedge 70 is inserted between a pair of GIRN lenses, a beam of light incident thereon is refracted and directed towards a predetermined output port as described above.

Fig. 14b shows another example of a multifaceted wedge 80. The wedge 80 has at least three wedged-shaped parts, 81, 82 and 83. The general arrangement is that the wedge 81 is on top of and in contact with the wedge 82 which is on top of an in contact with the wedge 83. The wedge 81 has at least two non-parallel surfaces 81a and 81b and at least two other surfaces 81c and 81d, wherein the width of surface 81c is smaller than the width of the surface 81d. The wedge 82 has at least two non-parallel surfaces 82a and 82b, and at least two other surfaces 82c and 82d, wherein the width of surface 82c is smaller than the width of the surface 82d. The wedge 83 also has at least two non-parallel surfaces 83a and 83b, and at least two other surfaces 83c and 83d, wherein the width of surface 83c is smaller than the width of the surface 83d. The angles between the two non-parallel surfaces and the centre thickness of each wedge 81, 82, and 83 are different from one wedge to the other and are selected so that, when the multifaceted wedge 80 is inserted between a pair of GIRN lenses, a beam of light incident thereon is refracted and directed towards a predetermined output port as described above. In the embodiment shown in Fig. 14b, the angle and thickness of the wedge 81 are smaller than the angle and thickness of the wedge 82 which are smaller than that of the wedge 83.

Fig. 14c shows a multifaceted wedge 90 having at least two different wedged-shaped parts, 91 and 92. The two wedged-shaped parts are disposed so that the wedge 91 is on the top of and in contact with the wedge 92. The wedge 91 has at least two non-parallel surfaces 91a and 91b and at least two other surfaces 91c and 91d, wherein the width of surface 91c is smaller than the width of the surface 91 d. The upper half area 91a_{T} of the non-parallel surface 91a is light transmissive, whereas the lower half area 91a_{R} of the same surface is reflective. The wedge 92 has at least two non-parallel surfaces 92a and 92b, and at least two other surfaces 92c and 92d, wherein the width of surface 92c is smaller than the width of the surface 92d. The upper half area 92a_{T} of the non-parallel surface 92a is light transmissive, whereas the lower half area 92a_{R} of the same surface is reflective. The wedges are positioned so that the smallest surface 92c of the wedge 92 is below the largest surface 91d of the wedge 91, and the largest surface 92d of the wedge 92 is below the smallest surface 91c of the wedge 91. The angle between the two non-parallel surfaces and the centre thickness of the wedges 91 and 92 are selected so that, when the multifaceted wedge 90 is inserted between a pair of GIRN lenses, a beam of light incident thereon is either refracted or reflected towards a predetermined output port.

Other configurations and modes of operation can be readily adapted, by rearranging the position of the input port. For example, the input port may be positioned so that the input beam enters the input end face of the GRIN lens substantially offset from the optical axis of the lens. Moreover, in the aforementioned description, for ease of explanation, the first lens has been denoted as the input lens wherein the second lens has been denoted as the output lens; of course, the present invention is not limited to use in this direction and can be used in an alternate manner wherein the second lens functions as the input end and the first lens as the output end. Furthermore, it is also conceivable, to have beams of light propagating in opposite direction.

Of course, numerous other embodiments may be envisaged, for example, the pitch of the GRIN lenses may be substantially different than a quarter pitch and or the reflective surface of the wedge may face the input face of the second GRIN lens.

Other configurations of the wedges can easily be envisaged, for example, angles and thickness' of the multifaceted wedge 70 have been described similar in the two wedged-shaped parts 71 and 72; they may be different from one part to the other.

## Claims

1. An optical switch comprising:
a) at least one input port on one side for launching a beam of light along an optical path;
b) at least two output ports on an opposite side for receiving the beam of light, a first of the at least two output ports optically coupled to the at least one input port; and
c) a light transmissive wedge having at least two non-parallel surfaces, the light transmissive wedge movable into and out of the optical path, the wedge movable at least between first, second, and third positions corresponding to first, second, and third connect states, respectively.

2. An optical switch as defined in claim 1 wherein at least one of the at least two non-parallel surfaces corresponds to an input face of the light transmissive wedge and an other of the at least two non-parallel surfaces corresponds to an output face of the light transmissive wedge, and wherein said input and output faces of the light transmissive wedge are light transmissive surfaces for refracting the beam of light passing therethrough.

3. An optical switch as defined in claim 2, wherein one of the input and output surfaces comprises at least a reflective area for reflecting back the beam of light incident thereon so that the beam of light launched into the at least one input port is optically coupled to an output port located on the same side of the light transmissive wedge as the input port substantially opposite the at least two output ports, said optical switch further comprising an actuator for moving the light transmissive wedge into and out of the optical path.

4. An optical switch as defined in claim 3, wherein the actuator is a three or more position actuator for positioning the light transmissive wedge at least in the first, second and third positions, wherein in the first position the actuator moves the wedge out of the optical path for providing a single connection between the at least one input port and a first output port; in the second position the actuator moves the wedge into the optical path for single connection between the at least one input port and a second output port; and in the third position the actuator moves the wedge such that the reflective area is positioned in the optical path for single connection between the at least one input port and a third output port.

5. An optical switch as defined in claims 1, 2, 3 or 4 comprising at least a first GRIN lens optically coupled to the at least one input port for substantially collimating the beam of light onto the light transmissive wedge and for focussing the beam of light reflected from the reflective surface to the third output port in the third connect state.

6. An optical switch as defined in claim 5 comprising at least a second GRIN lens substantially coaxial to the first GRIN lens and optically coupled to at least two output ports for focussing the collimated beam of light from the first GRIN lens to the first output port in the first connect state and from the light transmissive wedge to the second output port in the second connect state.

7. An optical switch as defined in any of claims 1, 2, 3, 4, 5, or 6 comprising at least another light transmissive wedge having at least two non-parallel surfaces, the at least other wedge movable into and out of the optical path for allowing at least a fourth, a fifth, a sixth and a seventh connect states.

8. An optical switch as defined in claims 1, 2, 3 or 4 comprising a first GRIN lens and a second GRIN lens, the first GRIN lens optically coupled to the at least one input port and the second GRIN lens optically coupled to the at least two output ports, the lenses being arranged such that their inner end faces are facing one another to allow the beam of light launched into the at least one input port to couple to one of the at least two output ports on the outer end face of the second lens.

9. An optical switch as defined in claim 8 comprising a multifaceted wedge movable into and out of the optical path; a multifaceted wedge corresponding to an arrangement of a plurality of light transmissive wedges in close contact, each of the light transmissive wedge having at least two non-parallel surfaces wherein a surface of the at least two non-parallel surfaces of each light transmissive wedge corresponds to an input surface and another surface of the at least two non-parallel surfaces of each light transmissive wedge corresponds to an output surface.

10. An optical switch as defined in claim 10 wherein an area of at least one facet of the multifaceted wedge is a reflective area for reflecting back the beam of light incident thereon.

11. A method for switching a beam of light from one of a plurality of output ports to another, comprising the step of:
a) receiving at an input port a beam of light parallel to the optical axis of a first GRIN lens for collimating the beam of light;
b) transmitting the beam of light along an optical path to a second GRIN lens optically coupled to the plurality of output ports, the second GRIN lens for focussing the beam of light; and
c) inserting a wedge into the optical path for modifying the optical path so that the beam of light switches from one of the plurality of output ports and so that the beam of light exits the second GRIN lens at a predetermined output port of the plurality of output ports substantially parallel to the optical axis of the GRIN lens.
